# EUROPEAN PATENT SPECIFICATION

(11) **EP 4 033 699 B1**
(45) Date of publication and mention of the grant of the patent: **24.06.2026**
(21) Application number: 19882750.3
(22) Date of filing: 24.10.2019
(51) Int. Cl.: H04L 12/14, H04M 15/00, H04W 4/24, H04W 4/20

(54) **RULE SENDING AND RECEIVING METHOD AND FUNCTION ENTITIES**
REGELSENDE- UND -EMPFANGSVERFAHREN UND FUNKTIONSEINHEITEN
PROCÉDÉ D'ENVOI ET DE RÉCEPTION DE RÈGLE ET ENTITÉS DE FONCTION ASSOCIÉES

(30) Priority: 09.11.2018 CN 201811328913
(43) Date of publication of application: 27.07.2022
(73) Proprietor: ZTE Corporation, Shenzhen, Guangdong 518057 (CN)
(72) Inventor: XIA, Yong, Shenzhen, Guangdong 518057 (CN); GU, Xiaoyun, Shenzhen, Guangdong 518057 (CN); HUANG, Zhenggang, Shenzhen, Guangdong 518057 (CN); HOU, Lichang, Shenzhen, Guangdong 518057 (CN); LIN, Kai, Shenzhen, Guangdong 518057 (CN)
(74) Representative: Brunazzi, Stefano
(86) International application number: PCT/CN2019/113083
(87) International publication number: WO 2020/093878

(56) References cited:
- EP-A1- 3 278 495
- WO-A1-2018/195803
- CN-A- 105 009 521
- CN-A- 105 828 310
- CN-A- 107 302 441
- CN-A- 107 547 212
- CN-B- 105 828 310
- LTE: "Technical Specification Group Core Network and Terminals ;. '' Interface between the Control Plane and the User Plane Nodes; Stage 3 (Release 15", 3GPP TS 29.244 V15.3.0, 30 September 2018 (2018-09-30), XP051487290
- 5G: "Technical Specification Group Core Network and Terminals;. '' Policy and Charging Control Signalling Flows and Quality of Service (QoS) Parameter Mapping", 3GPP TS 29.213 VI5.4.0, 30 September 2018 (2018-09-30), XP051573139

## Description

### Technical Field

Embodiments of the invention relate to, but are not limited to, a rule sending method, a rule receiving method, a control plane function, a user plane function.

### Background

At present, some commercial sites have a very high degree of service differentiation, up to hundreds or even thousands. This determines that the number of rules for charging and control is quite large. In a commercial scenario, if a Policy and Charging Rules Function (PCRF) or a Policy Control Function (PCF) is not enabled, a large number of local rules must be configured on a Public Data Network (PDN) Gateway (PGW) or a Session Management Function (SMF). Even if the PCRF (PCF) uses a predefined rule name and a predefined rule group name to cover all rules, a large number of specific rules pointed to by its rule (group) name still need to be configured on the PGW (SMF). This is the current actual situation that the PGW (SMF) supports service refinement. The PCRF (PCF) cannot support sending dynamic rules for so many specific services through an Sx (N7) interface.

After control and user plane separation (CU separation), how is a large number of rules for an access user on a control plane (C plane) sent to a user plane (U plane, also called media plane) through Sx? If rules of all services are sent at the time of user access through a Packet Forwarding Control Plane (PFCP) session establishment request, a large number of Packet Detection Rules (PDRs) (possibly including a large number of Forwarding Action Rules (FARs), Usage Reporting Rules (URRs), and QoS Enforcement Rules (QERs)) will result in a huge signaling coding length, load-bearing burden for both the CU planes, and failure to meet commercial requirements. However, the rules are sent in batches through a PFCP session modification request, and the situation that a large number of signaling packets are caused between the CU planes is also unacceptable.

Patent documents EP 3 278 495 A1, CN 105 828 310 A, and technical document LTE: "Technical Specification Group Core Network and Terminals;" Interface between the Control Plane and the User Plane Nodes; Stage 3 (Release 15",3GPP TS 29.244 V15.3.0, 30 September 2018 (2018-09-30), XP051487290, provide related technical solutions; however, the above mentioned problem still remains unsolved.

### Summary

The invention is set out in the appended set of claims.

### Brief Description of the Drawings

Fig. 1 is a flowchart of a rule sending method according to an embodiment of the invention;
Fig. 2 is a flowchart of a rule sending method according to another embodiment of the invention;
Fig. 3 is a flowchart of a rule sending method according to yet another embodiment of the invention;
Fig. 4 is a flowchart of a rule receiving method according to an embodiment of the invention;
Fig. 5 is a flowchart of step 402 of Fig. 4;
Fig. 6 is a flowchart of a rule receiving method according to another embodiment of the invention;
Fig. 7 is a flowchart of a rule receiving method according to yet another embodiment of the invention;
Fig. 8 is a flowchart of Application Example 1 (pure C-plane local rule) according to the invention;
Fig. 9 is a flowchart of Application Example 2 (a PCRF (PCF) sends a specified user rule in a predefined rule group) according to the invention;
Fig. 10 is a flowchart of Application Example 3 (opening an online charging service) according to the invention;
Fig. 11 is a flowchart of Application Example 4 (a network side initiates dedicated bearer (QFI) establishment) according to the invention;
Fig. 12 is a flowchart of Application Example 5 (a PCRF (PCF) sends a flow information dynamic rule) according to the invention;
Fig. 13 is a flowchart of Application Example 6 (manually configured as a user group common service identification) according to the invention;
Fig. 14 is a flowchart of Application Example 7 (a system automatically generates service rankings as a user group common service identification) according to the invention;
Fig. 15 is a flowchart of Application Example 8 (storing user preference data as a user common service identification using a peripheral device) according to the invention;
Fig. 16 is a schematic composition diagram of a control plane function according to an embodiment of the invention;
Fig. 17 is a schematic composition diagram of a user plane function according to an embodiment of the invention;
Fig. 18 is a schematic composition diagram of a control plane function according to another embodiment of the invention; and
Fig. 19 is a schematic composition diagram of a user plane function according to another embodiment of the invention.

### Detailed Description of the Embodiments

The embodiments of the invention are described below in combination with the accompanying drawings.

These steps shown in the flowchart of the accompanying drawings can be executed in a computer system like a group of computer executable instructions. Moreover, although a logical sequence is shown in the flowchart, in some cases, the shown or described steps can be performed in a sequence different from that described herein.

After the analysis, it can be found that when a C plane is prepared to send service rules to a U plane, the C plane does not really know which services are to be and ultimately used by a user, so the C plane can only send as many, or all, service rules to the U plane as possible, and a large number of rules need to be sent.

In the embodiments of the invention, the C plane may only send rules of common services to the U plane. For services (new services) that the C plane does not send creation rules to the U plane, a policy of "on-demand distribution" installation rules is adopted, i.e. the user uses such services and then installs related rules (which may include service-related PDR, FAR, URR, and QER). In some cases, the C plane may also not send rules of common services, i.e., not specify common services.

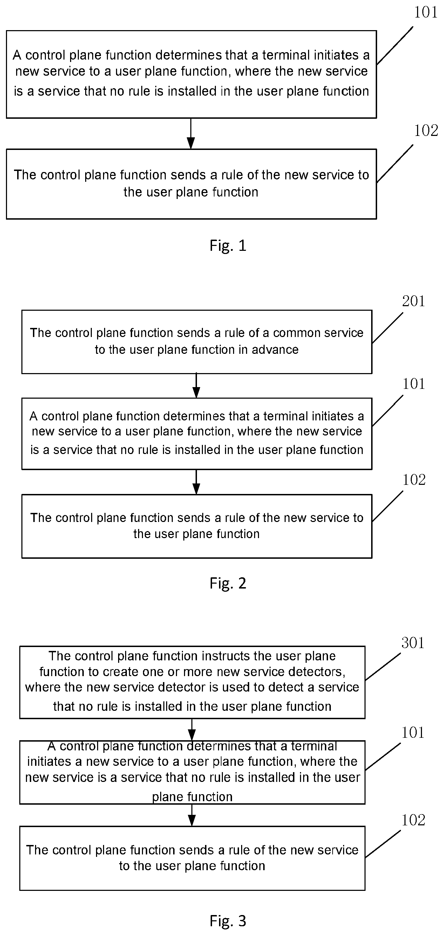

As shown in Fig. 1, a rule sending method according to an embodiment of the invention is applied to a controller function, and includes the following steps.

In step 101, a control plane function determines that a terminal initiates a new service to a user plane function, where the new service is a service that no rule is installed in the user plane function.

The control plane function may be a PCRF or PCF and the user plane function may be a PGW or SMF.

In an embodiment, the control plane function receives a new service identification reporting notification sent by the user plane function, and determines that the terminal initiates a new service to the user plane function according to the new service identification reporting notification.

The new service identification reporting notification may be, but is not limited to, a PFCP Session Report message.

In step 102, the control plane function sends a rule of the new service to the user plane function.

The control plane function may directly determine the rule of the new service or may interact with other network elements (or Network Functions (NFs)) such as an Online Charging System (OCS) to determine the rule of the new service.

In an embodiment, the control plane function sends a rule of the new service to the user plane function through a session modification request.

The session modification request may be, but is not limited to, a PFCP Modify Request message.

As shown in Fig. 2, in an embodiment, before step 101, the method may further include the following steps.

In step 201, the control plane function sends a rule of a common service to the user plane function in advance.

A large number of rules planned by operators for users are for various specific services, i.e. different Application IDs (ApplDs). Users typically do not use all of these services (at least not all right away), and common services are grouped together in several. Based on such an actual situation, when the C plane does not know which services the user can use, rules of all services do not need to be sent to the U plane, and only common services need to be sent, so that the rule hit rate of a large number of common services of the user can be ensured, and the situation that the signaling length is overlong due to too many sent rules can be avoided. In a special case, the C plane may not send a specific service rule to the U plane for installation, i.e. not specify a common service.

In an embodiment, the control plane function sends a rule of a common service to the user plane function in advance through an Sx (N4) interface.

In an embodiment, before step 201, the method further includes that: the control plane function may determine a common service by adopting, but not limited to, the following manners and combinations thereof:
1. The common service is determined according to received configuration information.
   The common service may be manually specified based on human experience or related data, and configured on the control plane function.
2. Statistical ranking is performed according to service-related global statistical data, and the common service is determined.
   After statistical ranking is performed on global statistical data related to specific services, the data is applied to all individual users, so that common services accessed to users may be automatically determined.
3. The common service is determined according to a user Internet surfing behavior record.

A common service belonging to a specific user may be analyzed based on an individual user Internet surfing behavior record by an operator, so that the common service accessed to the user may be determined automatically. In this way, data such as a user Internet surfing behavior is stored by an external device, and the data is acquired through interaction.

As shown in Fig. 3, in an embodiment, before step 101, the method may further include the following steps.

In step 301, the control plane function instructs the user plane function to create one or more new service detectors, where the new service detector is used to detect a service that no rule is installed in the user plane function.

Steps 201 and 301 may be performed simultaneously, i.e. the control plane function instructs the user plane function to create a new service detector while sending the rule of the common service.

The new service detector may notify the control plane function of a specific detection information after detecting the new service.

The new service detector may be repeatedly used, after the rule installation of the new service is completed once, the detection function may be restored again, and a new service with a non-installed rule may be continuously detected.

In an embodiment, the packet matching rule includes a PDR (uplink and downlink) that does not specify an application ID, where the PDR that does not specify an application ID has a lower priority than a PDR that specifies an application ID.

In an embodiment, the PDR that does not specify an application ID is associated with a URR provided with a start trigger, where the start trigger is used to trigger new service identification reporting.

In an embodiment, the control plane function instructs to update the URR provided with a start trigger through the session modification request so as to reset the start trigger.

In an embodiment, the PDR that does not specify an application ID is associated with an FAR provided with a caching operation.

In an embodiment, the new service detector is used to detect at least one of the following services:
a default bearer service, a dedicated bearer service, or a dynamic rule service.

The new service detector includes a packet matching rule with a preset matching parameter.

The new service detector may set different Service Data Flows (SDFs) (SDFs may be wildly matched or there is no SDF) in Packet Detection Information (PDI) simultaneously according to different application scenarios to detect new services for default bearers, dedicated bearers, Policy Control and Charging (PCC) dynamic rules, etc. The control plane function may send multiple new service detectors each responsible for the detection.

Through the embodiments of the invention, in the case of CU separation, user rules sent to the U plane are reasonably processed, so that overlong signaling can be prevented, a large amount of signaling between the CU planes can be avoided, operating and using resources of the C plane and the U plane are saved, and the forwarding performance of the U plane is improved. The situation that the system cannot use services under the condition of more divided services in actual commercial use is avoided, the normal use of user services is ensured, and the correct charging and control of a core network on user services are ensured.

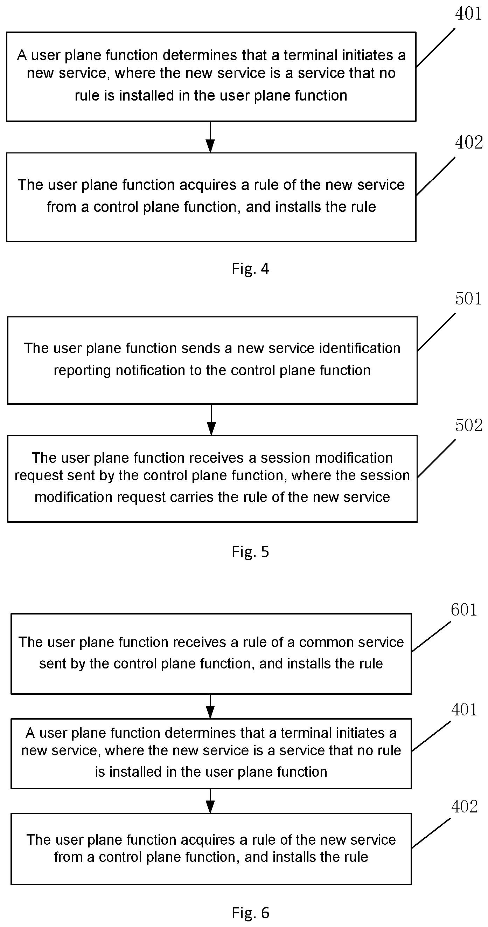

As shown in Fig. 4, a rule receiving method according to an embodiment of the invention is applied to a user plane function, and includes the following steps.

In step 401, a user plane function determines that a terminal initiates a new service, where the new service is a service that no rule is installed in the user plane function.

The user plane function determines that the terminal initiates a new service according to a service packet of a new service initiated by the terminal.

In step 402, the user plane function acquires a rule of the new service from a control plane function, and installs the rule.

As shown in Fig. 5, in an embodiment, step 402 may include the following steps.

In step 501, the user plane function sends a new service identification reporting notification to the control plane function.

The new service identification reporting notification may be, but is not limited to, a PFCP Session Report message.

In step 502, the user plane function receives a session modification request sent by the control plane function, where the session modification request carries the rule of the new service.

The session modification request may be, but is not limited to, a PFCP Modify Request message.

As shown in Fig. 6, in an embodiment, before step 401, the method further includes the following steps.

In step 601, the user plane function receives a rule of a common service sent by the control plane function, and installs the rule.

A rule of a common service sent by the control plane function may be received through an Sx (N4) interface.

The rule of the common service is received from the control plane function and installed, so that the rule hit rate of a large number of common services of the user can be ensured, and the situation that the signaling length is overlong due to too many sent rules can be avoided.

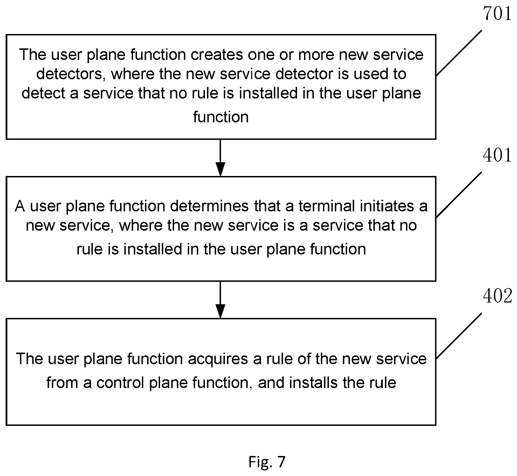

As shown in Fig. 7, in an embodiment, before step 401, the method further includes the following steps.

In step 701, the user plane function creates one or more new service detectors, where the new service detector is used to detect a service that no rule is installed in the user plane function.

The user plane function may create one or more new service detectors according to an instruction of the control plane function, and may also automatically create one or more new service detectors according to preset rules.

When the new service detector is created by the instruction of the control plane function, steps 601 and 701 may be performed simultaneously, i.e. the control plane function instructs the user plane function to create a new service detector while sending the rule of the common service.

The new service detector may notify the control plane function of a specific detection information after detecting the new service.

In an embodiment, the operation that a user plane function determines that a terminal initiates a new service includes that:
the user plane function receives a service packet of a new service initiated by the terminal, and detects the service packet through the new service detector to determine that the terminal initiates a new service.

In an embodiment, the new service detector includes a packet matching rule with a preset matching parameter, and the operation that the service packet is detected through the new service detector to determine that the terminal initiates a new service includes that:
the service packet is matched through the packet matching rule, and it is determined that the terminal initiates a new service when the matching is successful.

In an embodiment, the packet matching rule includes a PDR (uplink and downlink) that does not specify an application ID, where the PDR that does not specify an application ID has a lower priority than a PDR that specifies an application ID.

In an embodiment, the PDR that does not specify an application ID is associated with a URR provided with a start trigger, where the start trigger is used to trigger new service identification reporting.

The user plane function receives a service packet of a new service initiated by the terminal, starts a trigger to trigger new service identification report when determining that the terminal initiates the new service, and sends a new service identification reporting notification to the control plane function.

In an embodiment, the PDR that does not specify an application ID is associated with an FAR provided with a caching operation, and after a user plane function determines that a terminal initiates a new service, the method further includes that:
the user plane function caches a service packet of the new service.

In an embodiment, after the user plane function acquires a rule of the new service from a control plane function, and installs the rule, the method further includes that:
the user plane function releases the cached service packet of the new service, re-matching a rule, and executes according to the rule of the new service.

In an embodiment, in step 502, the session modification request also instructs to update the URR provided with a start trigger, and the user plane function instructs to update the URR according to the session modification request so as to reset the start trigger. Therefore, the new service detector may be repeatedly used, after the rule installation of the new service is completed once, the detection function may be restored again, and a new service with a non-installed rule may be continuously detected.

In an embodiment, the new service detector is used to detect at least one of the following services:
a default bearer service, a dedicated bearer service, or a dynamic rule service.

The new service detector may set different SDFs (SDFs may be wildly configured or there is no SDF) in PDI simultaneously according to different application scenarios to detect new services for default bearers, dedicated bearers, PCC dynamic rules, etc.

Through the embodiments of the invention, in the case of CU separation, user rules sent to the U plane are reasonably processed, so that overlong signaling can be prevented, a large amount of signaling between the CU planes can be avoided, operating and using resources of the C plane and the U plane are saved, and the forwarding performance of the U plane is improved. The situation that the system cannot use services under the condition of more divided services in actual commercial use is avoided, the normal use of user services is ensured, and the correct charging and control of a core network on user services are ensured.

Some application examples will be taken below for illustration.

### Application Example 1

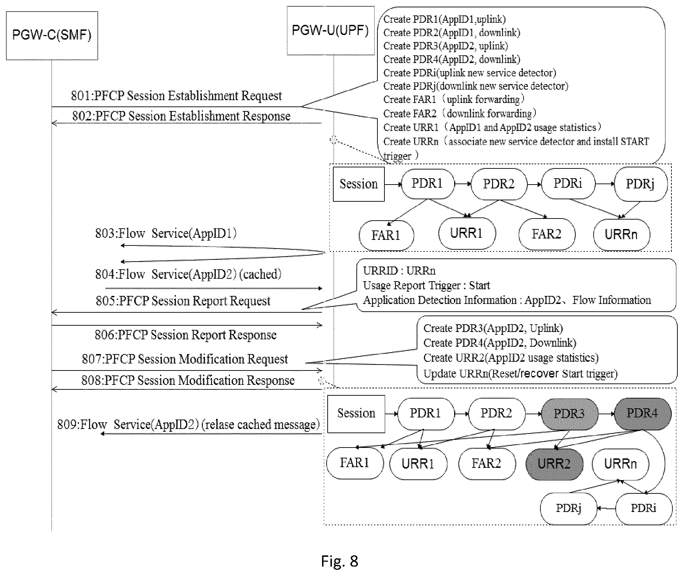

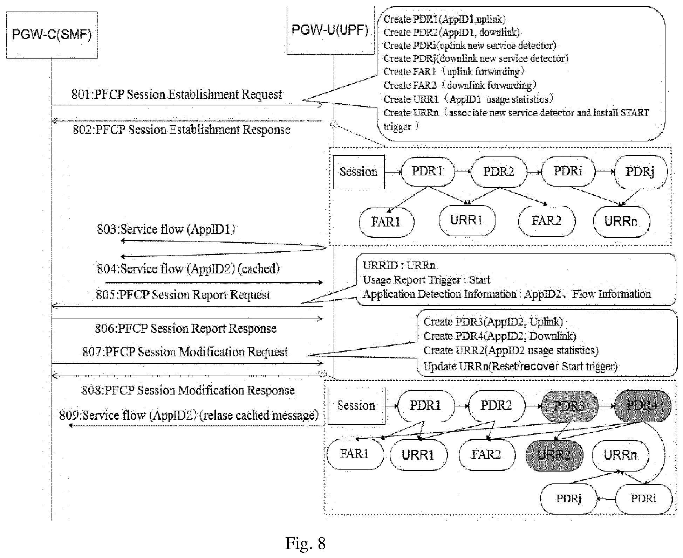

As shown in Fig. 8, Application Example 1 includes the following steps.

In step 801, a user session is created, and a C plane initiates a request to establish an Sx (N4) session to a U plane. The degree of user service differentiation is high, there are multiple rules, and hundreds of PDR rules may be required if the rules are all installed to the U plane once. Here, for simplicity of explanation, it is assumed that there is only one service commonly used by a user, i.e., a service represented by ApplD1, and uplink and downlink PDR1 and PDR2 are created for this service, where PDI of PDR1 includes tunnel information such as a Local Full Qualified Tunnel Endpoint Identifier (F-TEID), and an Application ID (ApplD1), and PDI of PDR2 includes a User Equipment (UE) Internet Protocol (IP) address, and an Application ID (ApplD1). FAR1 is used for uplink forwarding and FAR2 is used for downlink forwarding. For a service of AppID, URR1 is used as a usage statistics rule. In order to detect other non-specific services (i.e. other ApplDs), uplink and downlink PDRi and PDRj are created for the services, where PDI of PDRi includes tunnel information such as Local F-TEID, and no Application ID (i.e. widely matched with all Application IDs), and PDI of PDRj includes a UE IP address, and no Application ID (i.e. widely matched with all Application IDs). PDRi and PDRj have a lower priority than PDR1 and PDR2 for a specific AppID1 service. PDRi and PDRj are associated with URRn, URRn is provided with a start trigger, once a packet is matched with PDRi, PDRj may trigger the detection of start reporting of other services, and only services except ApplD1 may trigger the start reporting of URRn. In order to cache a packet when a new service is detected, PDRi and PDRj are associated with FAR rules of a caching operation and have BAR rules indicating specific caching parameters, the protocols have been specifically described and are not described again, and the new service detector in subsequent examples is similarly associated with cache-related FAR and BAR.

In step 802, a session establishment response is performed, and at this time, the session establishment is successful. A relationship between sessions and PDR, FAR and URR is as shown in Fig. 8, where QER is omitted, and the principle is the same.

In step 803, a service flow of ApplD1 is initiated to pass through the U plane, and PDR1 and PDR2 are matched and executed according to corresponding FAR1, FAR2 and URR1 rules.

In step 804, a terminal initiates a service flow of ApplD2 to arrive at the U plane, the U plane is provided with an application identification function, and the service flow may be identified as AppID2. PDRi or PDRj is matched, start reporting of URRn in step 805 is triggered, and a service flow packet is cached by the U plane.

In step 805, when the U plane initiates the start reporting of URRn, an application ID is filled into application detection information as ApplD2, and service flow information is reported.

In step 806, the C plane responds to a session report request of the U plane.

In step 807, when the C plane receives the start reporting of URRn in step 805, the C plane has sensed the arrival of a new service ApplD2 and knows that a service rule of ApplD2 has not been sent to the U plane, and then immediately initiates a session modification request to the U plane after responding to the session report request of the U plane in step 806. The session modification request includes creating uplink and downlink PDR3 and PDR4 for an AppID2 service, where PDI of PDR3 includes tunnel information such as Local F-TEID, and an Application ID (AppID2), and PDI of PDR4 includes a UE IP address, and an Application ID (ApplD2). PDR3 and PDR4 have a priority higher than that of PDRi and PDRj. An independent usage statistics rule URR2 for the ApplD2 service (also pointing to the previous URR1, and highlighting the characteristics of ApplD2 for convenience of explanation only), and original FAR1 and FAR2 are pointed for uplink and downlink forwarding of the ApplD2 service to indicate that the uplink and downlink forwarding rule of the ApplD2 service is the same as that of AppID1. Finally, in the session modification request, URRn is updated, and a start trigger thereof is recovered, so that the start reporting of URRn may be triggered as well when a new service (services other than ApplD1 and ApplD2) arrives next time.

In step 808, the U plane responds to the session modification request initiated by the C plane, and at this time, the relationships of the rules in the session are as shown in Fig. 8. PDR3 and PDR4 have been successfully installed, and have a priority higher than that of PDRi and PDRj. URR2 is also successfully installed and associated with a PDR of the ApplD2 service. PDRi, PDRj, and URRn continue to detect unused, non-installed rule services as in the process following step 802.

In step 809, the U plane releases the packets cached in step 804, executes again according to the rules under the session, and the packets of AppID2 are matched with PDR3 and PDR4 and are subjected to usage statistics by URR2. Subsequently, the ApplD2 service will have rules to follow, and there is no need to request the C plane for rule installation.

### Application Example 9

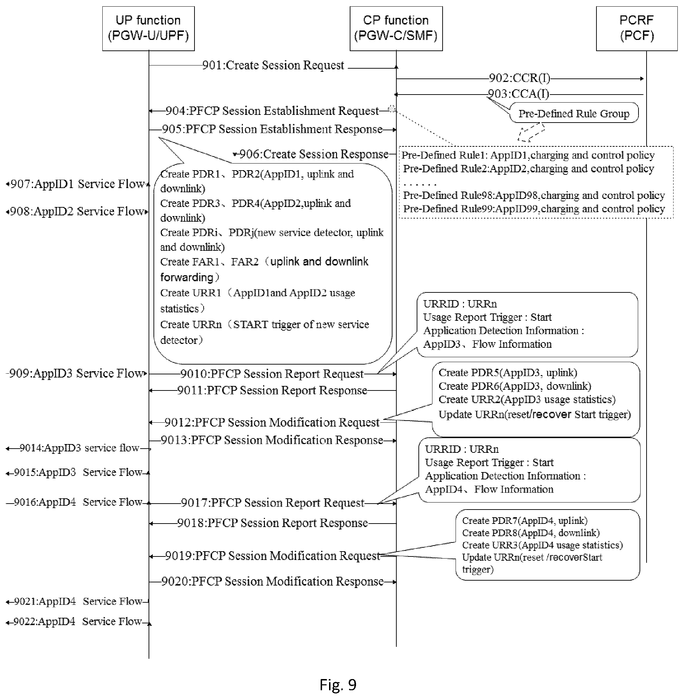

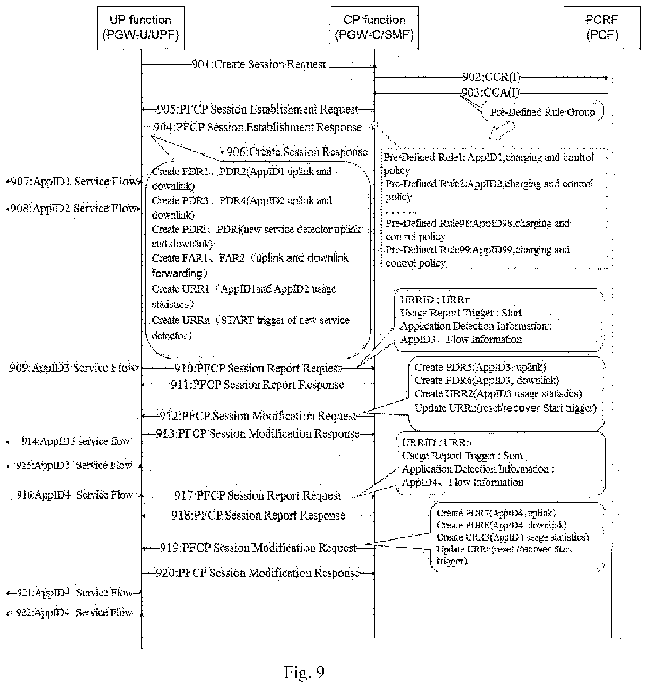

As shown in Fig. 9, Application Example 2 includes the following steps.

In step 901, a C plane receives a session creation request.

In step 902, the C plane initiates a Credit Control Request (CCR (I)) (in the type of an initial request) to a PCRF (PCF).

In step 903, the PCRF (PCF) responds to the CCA (I) and sends a predefined rule group name in the CCA (I), where the predefined rule group name corresponds to 99 predefined rules configured by the C plane, and each predefined rule is a charging and control policy of a specific service (with a specified AppID).

In step 904, the C plane receives the CCA (I), finds the 99 predefined rules of a user according to the predefined rule group name, selects predefined rules of two common services (the common services here are ApplD1 and ApplD2) from the specified configuration, converts the predefined rules into N4 (Sx) interface rules, and sends the rules to a U plane through a session establishment request. PDR1, PDR2 PDR3, and PDR4 represents the uplink and downlink PDRs of ApplD1 and ApplD2 services respectively, forwarding rules FAR1 and FAR2 thereof as well as usage statistics URR1 thereof are specified. Meanwhile, PDRi and PDRj are sent as new service detectors, and URRn is a start trigger thereof.

In step 905, the U plane responds to the session establishment request of the C plane.

In step 906, the C plane responds to the session creation request successfully.

In step 907, a terminal initiates a common service AppID1, which is matched with PDR1 and PDR2 in uplink and downlink, forwarded by FAR1 and FAR2, and subjected to usage statistics into URR1, and the service is normal.

In step 908, a terminal initiates a common service ApplD2, which is matched with PDR3 and PDR4 in uplink and downlink, forwarded by FAR1 and FAR2, and subjected to usage statistics into URR1, and the service is normal.

In step 909, the terminal initiates a non-common service ApplD3, which is matched with PDRi and PDRj in uplink and downlink, step 910 is triggered, and a packet is cached.

In step 910, a new service detector finds that a new service ApplD3 arrives, the U plane initiates a session report request to the C plane, and reports the start triggering of URRn, including detection information indicating that the application ID is ApplD3 and flow information.

In step 911, the C plane responds to the session report request of the U plane.

In step 912, when the C plane receives the start reporting of URRn in step 910, the C plane has sensed the arrival of a new service AppID3 and knows that a service rule of AppID3 has not been sent to the U plane, and then immediately initiates a session modification request to the U plane after responding to the session report request of the U plane in step 911. The session modification request includes creating uplink and downlink PDR5 and PDR6 for the ApplD3 service. PDR5 and PDR6 have a priority higher than that of PDRi and PDRj. An independent usage statistics rule URR2 is created for the ApplD3 service, and a forwarding rule FAR related to the ApplD3 may be specified according to specific service characteristics and is not specifically explained here. Finally, in the session modification request, URRn is updated, and a start trigger thereof is recovered, so that the start reporting of URRn may be triggered as well when a new service (services other than ApplD1, ApplD2, and ApplD3) arrives next time.

In step 913, the U plane responds to the session modification request initiated by the C plane.

In step 914, the U plane releases the packets cached in step 909, executes again according to the rules under the session, and the packets of AppID3 are matched with PDR5 and PDR6 and are subjected to usage statistics by URR2.

In step 915, subsequently, the ApplD3 service flow will have rules to follow, there is no need to request the C plane for rule installation, and the service flow smoothly passes through the U plane.

In step 916, the terminal initiates a non-common service ApplD4, which is matched with PDRi and PDRj in uplink and downlink, step 917 is triggered, and a packet is cached.

In step 917, a new service detector finds that a new service ApplD4 arrives, the U plane initiates a session report request to the C plane, and reports the start triggering of URRn, including detection information indicating that the application ID is ApplD4 and flow information.

In step 918, the C plane responds to the session report request of the U plane.

In step 919, when the C plane receives the start reporting of URRn in step 917, the C plane has sensed the arrival of a new service ApplD4 and knows that a service rule of AppID4 has not been sent to the U plane, and then immediately initiates a session modification request to the U plane after responding to the session report request of the U plane in step 918. The session modification request includes creating uplink and downlink PDR7 and PDR8 for the ApplD4 service. PDR7 and PDR8 have a priority higher than that of PDRi and PDRj. An independent usage statistics rule URR3 is created for the ApplD4 service. Finally, in the session modification request, URRn is updated, and a start trigger thereof is recovered, so that the start reporting of URRn may be triggered as well when a new service (services other than ApplD1, ApplD2, ApplD3, and ApplD4) arrives next time.

In step 920, the U plane responds to the session modification request initiated by the C plane.

In step 921, the U plane releases the packets cached in step 916, executes again according to the rules under the session, and the packets of ApplD4 are matched with PDR7 and PDR8 and are subjected to usage statistics by URR3.

In step 922, subsequently, the ApplD4 service flow will have rules to follow, there is no need to request the C plane for rule installation, and the service flow smoothly passes through the U plane.

### Application Example 3

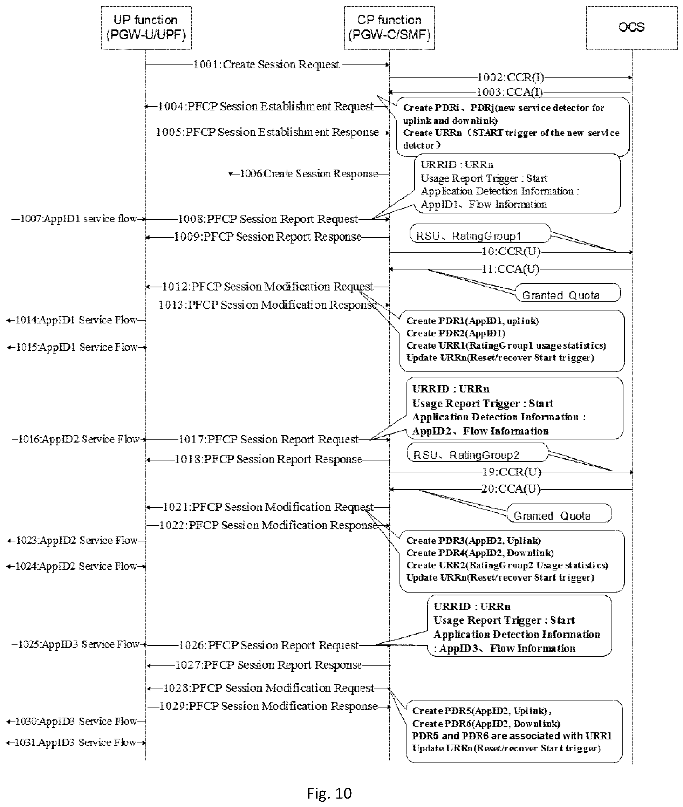

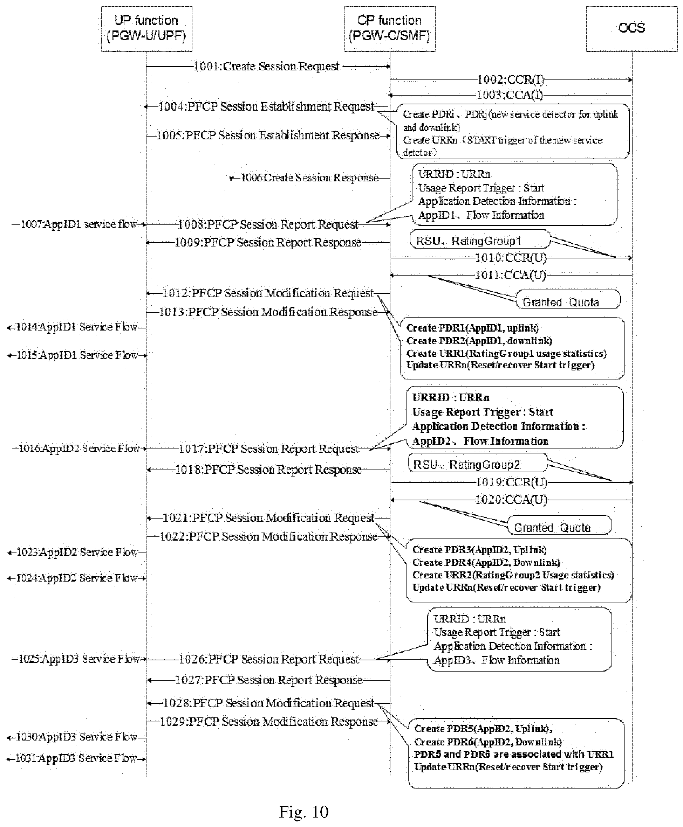

As shown in Fig. 10, Application Example 3 includes the following steps.

In step 1001, a C plane receives a session creation request.

In step 1002, the C plane initiates a CCR (I) authentication request to an OCS.

In step 1003, the OCS responds to a CCA (I) to indicate successful authentication and access allowing.

In step 1004, the C plane initiates a session establishment request to a U plane. For simplicity of explanation, only new service detectors PDRi and PDRj and a start trigger URRn are sent without sending rules of common services, i.e. without common services.

In step 1005, the U plane responds to the session establishment request of the C plane.

In step 1006, the C plane responds to the session creation request successfully.

In step 1007, the terminal initiates an AppID1 service, which is matched with PDRi and PDRj in uplink and downlink, step 1008 is triggered, and a packet is cached.

In step 1008, a new service detector finds that a new service ApplD1 arrives, the U plane initiates a session report request to the C plane, and reports the start triggering of URRn, including detection information indicating that the application ID is ApplD1 and flow information.

In step 1009, the C plane responds to the session report request of the U plane.

In step 1010, when the C plane receives the start reporting of URRn in step 1008, the C plane has sensed the arrival of a new service ApplD1 and knows that a service rule of ApplD1 has not been sent to the U plane. Meanwhile, according to the rule configured in the C plane, the service belongs to a rating group RatingGroup1 on a charging policy, and RatingGroup1 is not authorized by an OCS quota. Then the C plane initiates a CCR (U) (in the type of an update request) to the OCS to request quota authorization for RatingGroup1.

In step 1011, the OCS responds to the quota request of the C plane, grants the quota in the CCA (U), and allows the user to use the RatingGroup1 service.

In step 1012, according to a local policy of ApplD1 available to the C plane in step 1010 and the RatingGroup1 quota authorization obtained by the C plane from the OCS in step 1011, the C plane may send all rules corresponding to ApplD1. Then the C plane initiates a session modification request to the U plane, creates uplink and downlink PDR1 and PDR2 for the ApplD1 service, and creates URR1 for RatingGroup1 for usage statistics and quota control of the RatingGroup1 service including the AppID1 service, and PDR1 and PDR2 are associated with URR1. Finally, in the session modification request, URRn is updated, and a start trigger thereof is recovered, so that the start reporting of URRn may be triggered as well when a new service (services other than ApplD1) arrives next time.

In step 1013, the U plane responds to the session modification request initiated by the C plane.

In step 1014, the U plane releases the packets cached in step 1007, executes again according to the rules under the session, and the packets of ApplD1 are matched with PDR1 and PDR2 and are subjected to usage statistics by URR1.

In step 1015, subsequently, the ApplD1 service flow will have rules to follow, there is no need to request the C plane for rule installation, and the service flow smoothly passes through the U plane.

In step 1016, the terminal initiates an AppID2 service, which is matched with PDRi and PDRj in uplink and downlink, step 1017 is triggered, and a packet is cached.

In step 1017, a new service detector finds that a new service ApplD2 arrives, the U plane initiates a session report request to the C plane, and reports the start triggering of URRn, including detection information indicating that the application ID is ApplD2 and flow information.

In step 1018, the C plane responds to the session report request of the U plane.

In step 1019, when the C plane receives the start reporting of URRn in step 1017, the C plane has sensed the arrival of a new service AppID2 and knows that a service rule of AppID2 has not been sent to the U plane. Meanwhile, according to the rule configured in the C plane, the service belongs to a rating group RatingGroup2 on a charging policy, and RatingGroup2 is not authorized by an OCS quota. Then the C plane initiates a CCR (U) to the OCS to request quota authorization for RatingGroup2.

In step 1020, the OCS responds to the quota request of the C plane, grants the quota in the CCA (U), and allows the user to use the RatingGroup2 service.

In step 1021, according to a local policy of ApplD2 available to the C plane in step 1019 and the RatingGroup2 quota authorization obtained by the C plane from the OCS in step 1020, the C plane may send all rules corresponding to ApplD2. Then the C plane initiates a session modification request to the U plane, creates uplink and downlink PDR3 and PDR4 for the ApplD2 service, and creates URR2 for RatingGroup2 for usage statistics and quota control of the RatingGroup2 service including the ApplD2 service, and PDR3 and PDR4 are associated with URR2. Finally, in the session modification request, URRn is updated, and a start trigger thereof is recovered, so that the start reporting of URRn may be triggered as well when a new service (services other than ApplD1 and ApplD2) arrives next time.

In step 1022, the U plane responds to the session modification request initiated by the C plane.

In step 1023, the U plane releases the packets cached in step 1016, executes again according to the rules under the session, and the packets of AppID2 are matched with PDR3 and PDR4 and are subjected to usage statistics by URR2.

In step 1024, subsequently, the ApplD2 service flow will have rules to follow, there is no need to request the C plane for rule installation, and the service flow smoothly passes through the U plane.

In step 1025, the terminal initiates an AppID3 service, which is matched with PDRi and PDRj in uplink and downlink, step 1026 is triggered, and a packet is cached.

In step 1026, a new service detector finds that a new service ApplD3 arrives, the U plane initiates a session report request to the C plane, and reports the start triggering of URRn, including detection information indicating that the application ID is ApplD3 and flow information.

In step 1027, the C plane responds to the session report request of the U plane.

In step 1028, when the C plane receives the start reporting of URRn in step 1026, the C plane has sensed the arrival of a new service AppID3 and knows that a service rule of AppID3 has not been sent to the U plane. Meanwhile, according to the rule configured in the C plane, the service belongs to a rating group RatingGroup1 on a charging policy, and RatingGroup1 has been authorized by an OCS quota. Therefore, the C plane may already send all the rules corresponding to AppID3. Then the C plane initiates a session modification request to the U plane, creates uplink and downlink PDR5 and PDR6 for the AppID3 service, and associates URR1. Finally, in the session modification request, URRn is updated, and a start trigger thereof is recovered, so that the start reporting of URRn may be triggered as well when a new service (services other than ApplD1, AppID2, and ApplD3) arrives next time.

In step 1029, the U plane responds to the session modification request initiated by the C plane.

In step 1030, the U plane releases the packets cached in step 1025, executes again according to the rules under the session, and the packets of AppID3 are matched with PDR5 and PDR6 and are subjected to usage statistics by URR1.

In step 1031, subsequently, the AppID3 service flow will have rules to follow, there is no need to request the C plane for rule installation, and the service flow smoothly passes through the U plane.

### Application Example 4

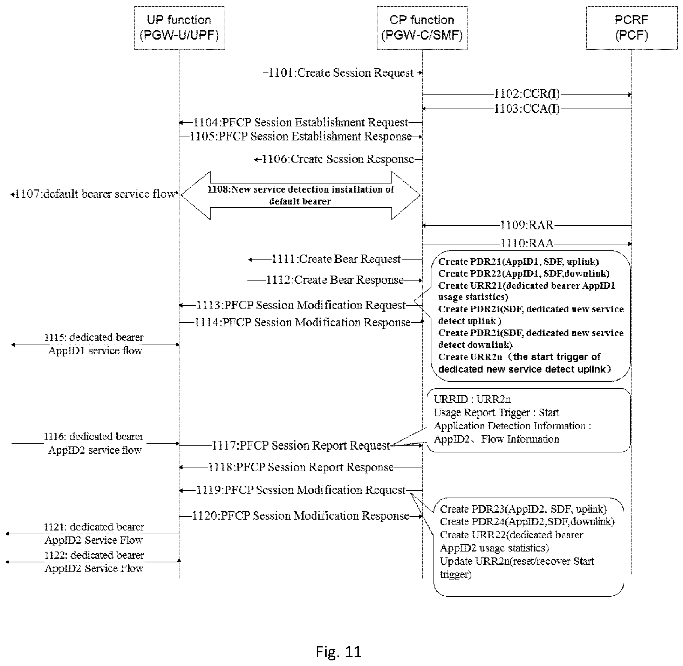

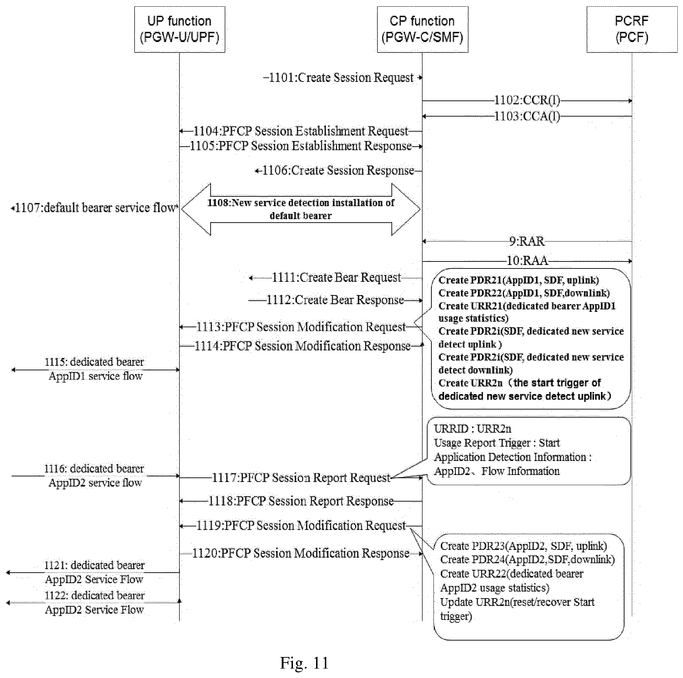

As shown in Fig. 11, Application Example 4 includes the following steps.

In step 1101, a C plane receives a session creation request.

In step 1102, the C plane initiates a CCR (I) request to a PCRF (PCF).

In step 1103, the PCRF (PCF) responds to a CCA (I) successfully.

In step 1104, the C plane receives the CCA (I), initiates a session establishment request to the U plane according to sending parameters and a local configuration condition of the PCRF, and installs related rules (including a new service detector), and all the installed rules belong to default bearers. The installation is similar to step 904 in Application Example 2.

In step 1105, the U plane responds to the session establishment request of the C plane.

In step 1106, the C plane responds to the session creation request successfully.

In step 1107, a terminal initiates a related service using a default bearer, which may or may not have a rule installed.

In step 1108, if the service initiated by the default bearer is a service with no rule installed, similar to steps 910 to 913 in Application Example 2, installation of new service rules is performed, where the installed rules belong to the default bearer.

In step 1109, the PCRF (PCF) initiates network-side private bearer establishment by specifying the flow information description of a dedicated bearer through an RAR request.

In step 1110, the C plane responds to the RAR request and returns an RAA response.

In step 1111, the C plane sends a bearer creation request to a front-end network element.

In step 1112, the C plane receives a bearer creation response from the front-end network element.

In step 1113, the C plane initiates a session modification request to the U plane. Here, the C plane optionally specifies a common service, i.e. a service represented by AppID1, for the dedicated bearer according to the designation, and creates uplink and downlink PDR21 and PDR22 for the service, where PDI of PDR21 includes tunnel information such as Local F-TEID, and SDF (i.e. dedicated flow message description), and an Application ID (ApplD1), and PDI of PDR22 includes a UE IP address, SDF (i.e. dedicated flow information description), and an Application ID (AppID1). For a service of dedicated AppID, URR21 is used as a usage statistics rule. In order to detect other dedicated services (i.e. other AppIDs), uplink and downlink PDR2i and PDR2j are created for the services, where PDI of PDR2i includes tunnel information such as Local F-TEID, SDF (i.e. dedicated flow information description), and no Application ID (i.e. widely matched with all Application IDs), and PDI of PDR2j includes a UE IP address, SDF (i.e. dedicated flow information description), and no Application ID (i.e. widely matched with all Application IDs). The priority of PDR 2i and PDR 2j is lower than PDR 21 and PDR 22 of the dedicated AppID1 service, but higher than the PDR priority of all default bearers. URR2n is created as a start trigger of a new service detector.

In step 1114, the U plane responds to the session modification request of the C plane.

In step 1115, the terminal initiates an ApplD1 service through the dedicated bearer, which is matched with PDR21 and PDR22 and subjected to usage statistics into URR21. The service is normally used.

In step 1116, the terminal initiates an ApplD2 service through the dedicated bearer, which is matched with PDR2i and PDR2j, step 1117 is triggered, and a packet is cached.

In step 1117, a dedicated new service detector finds that a new service ApplD2 arrives, the U plane initiates a session report request to the C plane, and reports the start triggering of URR2n, including detection information indicating that the application ID is ApplD2 and flow information.

In step 1118, the C plane responds to the session report request of the U plane.

In step 1119, when the C plane receives the start reporting of URR2n in step 1117, the C plane has sensed the arrival of a new service ApplD2 and knows that a service rule of ApplD2 has not been sent to the U plane, and then immediately initiates a session modification request to the U plane after responding to the session report request of the U plane in step 1118. The session modification request includes creating uplink and downlink PDR23 and PDR24 for the ApplD2 service. PDR23 and PDR24 have a priority higher than that of PDR2i and PDR2j. An independent usage statistics rule URR22 is created for the ApplD2 service. Finally, in the session modification request, URR2n is updated, and a start trigger thereof is recovered, so that the start reporting of URR2n may be triggered as well when a new service (services other than ApplD1 and ApplD2) arrives next time.

In step 1120, the U plane responds to the session modification request initiated by the C plane.

In step 1121, the U plane releases the packets cached in step 1116, executes again according to the rules under the session, and the dedicated packets of AppID2 are matched with PDR23 and PDR24 and are subjected to usage statistics by URR22.

In step 1122, subsequently, the dedicated ApplD2 service flow will have rules to follow, there is no need to request the C plane for rule installation, and the service flow smoothly passes through the U plane.

### Application Example 5

As shown in Fig. 12, Application Example 5 includes the following steps.

In step 1201, when a user session is created, a C plane instructs a U plane to create corresponding uplink and downlink PDR1 and PDR2 for an ApplD1 service on a default bearer and associate URR1, and to create corresponding uplink and downlink PDR3 and PDR4 for an AppID2 service and associate URR2.

In step 1202, the C plane initiates a certain CCR (U) request to a PCRF (PCF).

In step 1203, the PCRF (PCF) sends a dynamic rule in the responding CCA (U) in response to the CCR (U) request of the C plane, where the dynamic rule specifies certain services on the default bearer using flow description information, and requires special processing of the services conforming to the flow description information. However, this dynamic rule specifies only part of the rules and does not specify, for example, a charging mode.

In step 1204, after receiving the CCA (U), the C plane installs a dynamic rule according to an instruction of the PCRF (PCF), but finds that a specific service indicated by the flow description information specified by the dynamic rule cannot be determined (i.e. a unique ApplD cannot be determined), so that information such as a charging mode configured by the C plane cannot be obtained according to the Appl D, and part of rule information not indicated in the dynamic rule cannot be supplemented, and a complete rule cannot be sent to the U plane. Therefore, the U plane is instructed to create a new service detector for the dynamic rule, the specific service is detected first, and then the complete rule is installed. Then a session modification request is initiated to the U plane, and uplink and downlink PDR2i and PDR2j are created, where PDI of PDR2i includes tunnel information such as Local F-TEID, SDF (i.e. flow information description of dynamic rules), and no Application ID (i.e. widely matched with all Application IDs), and PDI of PDR2j includes a UE IP address, SDF (i.e. flow information description of dynamic rules), and no Application ID (i.e. widely matched with all Application IDs). The priority of PDR2i and PDR2j is higher than the PDR priority of an SDF (or no SDF) widely matched on all default bearers. PDR2i and PDR2j also belong to the PDR of the default bearer, except that the priority is relatively high. URR2n is created as a start trigger of a new service detector.

In step 1205, the U plane responds to the session modification request of the C plane.

In step 1206, the terminal initiates an ApplD1 service, which conforms to flow description information of a dynamic rule and is matched with PDR2i and PDR2j, step 1207 is triggered, and a packet is cached.

In step 1207, a new service detector of the dynamic rule finds that a new service ApplD1 arrives, the U plane initiates a session report request to the C plane, and reports the start triggering of URR2n, including detection information indicating that the application ID is ApplD1 and flow information.

In step 1208, the C plane responds to the session report request of the U plane.

In step 1209, when the C plane receives the start reporting of URR2n in step 1207, the C plane has sensed the arrival of a new service ApplD1 in the dynamic rule and knows that a service rule of ApplD1 in the dynamic rule has not been sent to the U plane, and then immediately initiates a session modification request to the U plane after responding to the session report request of the U plane in step 1208. The session modification request includes creating uplink and downlink PDR21 and PDR22 for the ApplD1 service in the dynamic rule. PDR21 and PDR22 have a priority higher than that of PDR2i and PDR2j. Since usage statistics belong to the same service of the default bearer, PDR 21 and PDR 22 associate URR1, i.e. incorporate usage statistics of the same bearer AppID1. Finally, in the session modification request, URR2n is updated, and a start trigger thereof is recovered, so that the start reporting of URR2n may be triggered as well when a new service (services other than AppID1) in the dynamic rule arrives next time.

In step 1210, the U plane responds to the session modification request initiated by the C plane.

In step 1211, the U plane releases the packets cached in step 1206, executes again according to the rules under the session, and the packets of AppID1 conforming to the dynamic rule are matched with PDR21 and PDR22 and are subjected to usage statistics by URR1.

In step 1212, subsequently, the ApplD1 service flow conforming to flow description information of the dynamic rule will have rules to follow, there is no need to request the C plane for rule installation, and the service flow smoothly passes through the U plane.

In step 1213, the terminal initiates an ApplD2 service, which conforms to flow description information of a dynamic rule and is matched with PDR2i and PDR2j, step 1214 is triggered, and a packet is cached.

In step 1214, a new service detector of the dynamic rule finds that a new service ApplD2 arrives, the U plane initiates a session report request to the C plane, and reports the start triggering of URR2n, including detection information indicating that the application ID is ApplD2 and flow information.

In step 1215, the C plane responds to the session report request of the U plane.

In step 1216, when the C plane receives the start reporting of URR2n in step 1214, the C plane has sensed the arrival of a new service ApplD2 in the dynamic rule and knows that a service rule of ApplD2 in the dynamic rule has not been sent to the U plane, and then immediately initiates a session modification request to the U plane after responding to the session report request of the U plane in step 1215. The session modification request includes creating uplink and downlink PDR23 and PDR24 for the ApplD2 service in the dynamic rule. PDR23 and PDR24 have a priority higher than that of PDR2i and PDR2j. Since usage statistics belong to the same service of the default bearer, PDR 23 and PDR 24 associate URR2, i.e. incorporate usage statistics of the same bearer AppID2. Finally, in the session modification request, URR2n is updated, and a start trigger thereof is recovered, so that the start reporting of URR2n may be triggered as well when a new service (services other than ApplD1 and ApplD2) in the dynamic rule arrives next time.

In step 1217, the U plane responds to the session modification request initiated by the C plane.

In step 1218, the U plane releases the packets cached in step 1213, executes again according to the rules under the session, and the packets of ApplD2 conforming to the dynamic rule are matched with PDR23 and PDR24 and are subjected to usage statistics by URR2.

In step 1219, subsequently, the ApplD2 service flow conforming to flow description information of the dynamic rule will have rules to follow, there is no need to request the C plane for rule installation, and the service flow smoothly passes through the U plane.

### Application Example 6

As shown in Fig. 13, Application Example 6 includes the following steps.

In step 1301, data configuration is performed on a C plane device, and two common services, namely ApplD1 and ApplD2, are configured. The number of common services may be as appropriate. For example, there are two common services here.

In step 1302, a user initiates a session creation request to a C plane, and requests access to the device.

In step 1303, the C plane initiates a PFCP session establishment request to a U plane, where the request instructs to install related rules of services AppID1 and ApplD2, and AppID1 and ApplD2 are the two common services configured in step 1301. The request also includes a new service detector.

In step 1304, the U plane responds to the PFCP session establishment request of the C plane.

In step 1305, the C plane responds to a session creation request initiated by the user.

### Application Example 7

As shown in Fig. 14, Application Example 7 includes the following steps.

In step 1401, a system runs to perform statistical analysis on data such as types and frequencies of services used by a user group, so as to generate a ranking of the user group about different services used by the user group, where the ranking may be used as identifications of common services. Here, for example, the ranking is, in order, ApplD1, ApplD2, AppID3, ApplD4, .... The ranking may be automatically generated in the C plane.

In step 1402, a user initiates a session creation request to a C plane, and requests access to the device.

In step 1403, the C plane initiates a PFCP session establishment request to a U plane, where the request instructs to install related rules of services ApplD1 and ApplD2, and AppID1 and ApplD2 are common services which are the first two services in the service ranking in step 1401. The request also includes a new service detector.

In step 1404, the U plane responds to the PFCP session establishment request of the C plane.

In step 1405, the C plane responds to a session creation request initiated by the user.

### Application Example 8

As shown in Fig. 15, Application Example 8 includes the following steps.

In step 1501, a user accesses a mobile network and performs various services using the mobile network. In the use process by the user, a core network device (here mainly a C plane or a U plane) stores service preference data using the mobile network to an external device.

In step 1502, the user then initiates a create session request to the C plane again to request access to the device, and the C plane acquires the service preference data of the user from the external device.

In step 1503, the C plane initiates a PFCP session establishment request to a U plane, where the request instructs to install related rules of services ApplD1 and AppID2, and AppID1 and AppID2 are the user preference data acquired by the C plane from the external device in step 1502, i.e. common services preferred by the user. The request also includes a new service detector.

In step 1504, the U plane responds to the PFCP session establishment request of the C plane.

In step 1505, the C plane responds to a session creation request initiated by the user.

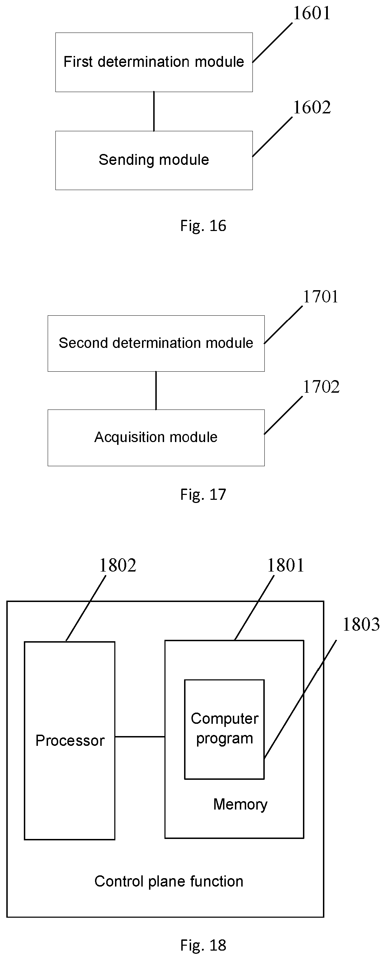

As shown in Fig. 16, the embodiments of the invention further provide a control plane function, which includes: a first determination module 1601, configured to determine that a terminal initiates a new service to a user plane function, where the new service is a service that no rule is installed in the user plane function; and a sending module 1602, configured to send a rule of the new service to the user plane function.

As shown in Fig. 17, the embodiments of the invention further provide a user plane function, which includes: a second determination module 1701, configured to determine that a terminal initiates a new service, where the new service is a service that no rule is installed in the user plane function; and an acquisition module 1702, configured to acquire a rule of the new service from a control plane function, and install the rule.

As shown in Fig. 18, the embodiments of the invention further provide a control plane function, which includes: a memory 1801, a processor 1802, and a computer program 1803 that is stored on the memory 1801 and can be executed by the processor 1802, where the processor 1802, when executing the computer program, implements the rule sending method.

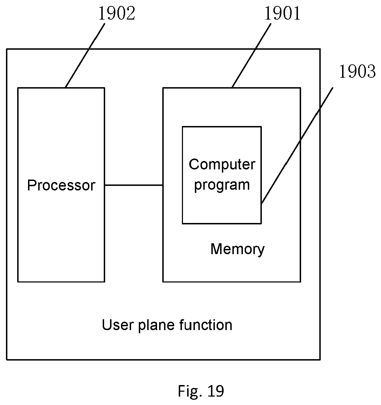

As shown in Fig. 19, the embodiments of the invention further provide a user plane function, which includes: a memory 1901, a processor 1902, and a computer program 1903 that is stored on the memory 1901 and can be executed by the processor 1902, where the processor 1902, when executing the computer program 1903, implements the rule receiving method.

The embodiments of the invention further provide a computer-readable storage medium, storing a computer-executable instruction, where the computer-executable instruction is used to perform the rule sending method.

The embodiments of the invention further provide a computer-readable storage medium, storing a computer-executable instruction, where the computer-executable instruction is used to perform the rule receiving method.

In the present embodiment, the storage medium may include, but is not limited to, various media capable of storing a program code such as a U disk, a Read-Only Memory (ROM), a Random Access Memory (RAM), a mobile hard disk, a magnetic disk or an optical disc.

Through the embodiments of the invention, in the case of CU separation, user rules sent to the U plane are reasonably processed, so that overlong signaling can be prevented, a large amount of signaling between the CU planes can be avoided, operating and using resources of the C plane and the U plane are saved, and the forwarding performance of the U plane is improved. The situation that the system cannot use services under the condition of more divided services in actual commercial use is avoided, the normal use of user services is ensured, and the correct charging and control of a core network on user services are ensured.

It will be appreciated by those of ordinary skill in the art that all or some of the steps in the above method disclosed, the system, the functional modules/units in the apparatus may be implemented as software, firmware, hardware, and a proper combination thereof. In hardware embodiments, the division between functional modules/units mentioned in the above description does not necessarily correspond to the division of physical components. For example, a physical component may have multiple functions, or a function or step may be performed collaboratively by multiple physical components. Some or all of the components may be implemented as software performed by a processor, for example, a digital signal processor or a microprocessor, or implemented as hardware, or implemented as an integrated circuit, for example, an application-specific integrated circuit. Such software may be distributed on computer readable media. The computer readable media may include computer storage media (or non-temporary media) and communication media (or temporary media). As is well known to those of ordinary skill in the art, the term computer storage media include volatile and non-volatile media, and removable and non-removable media which are implemented in any method or technology for storing information (such as a computer readable instruction, a data structure, a program module or other data). The computer storage media include, but not limited to, a RAM, a ROM, an Electrically Erasable Programmable Read-Only Memory (EEPROM), a flash memory or other memory technologies, a Compact Disc Read-Only Memory (CD-ROM), a Digital Video Disk (DVD) or other optical storage, a cartridge, a tape, a disk storage or other magnetic storage devices, or any other media which may be used for storing expected information and may be accessed by a computer. Moreover, as is well known to those of ordinary skill in the art, the communication media generally include the computer readable instruction, the data structure, the program module or other data, such as carriers or other transmission mechanisms, in a modulation data signal, and may include any information delivery media.

## Claims

1. A rule sending method, comprising:
determining, by a control plane function, that a terminal initiates a new service to a user plane function, wherein the new service is a service that no rule is installed in the user plane function (101); and
sending, by the control plane function, a rule of the new service to the user plane function (102);
wherein before determining, by a control plane function, that a terminal initiates a new service to a user plane function, the method further comprises:
instructing, by the control plane function, the user plane function to create one or more new service detectors, the new service detector being used to detect a service that no rule is installed in the user plane function (301), wherein the new service detector comprises a packet matching rule with a preset matching parameter, the new service detector being used to match the service packet through the packet matching rule, and determine that the terminal initiates a new service when the matching is successful;
wherein the new service detector is used to detect at least one of the following services: a default bearer service, a dedicated bearer service, or a dynamic rule service;
wherein before determining, by a control plane function, that a terminal initiates a new service to a user plane function, the method further comprises:
determining, by the control plane function, the common service by adopting at least one of the following manners: determining the common service according to received configuration information; determining the common service according to a statistical ranking of service-related global statistical data; and determining the common service according to a user Internet surfing behavior record;
sending, by the control plane function, a rule of a common service to the user plane function in advance (201).

2. The method according to claim 1, wherein the packet matching rule comprises a Packet Detection Rule, PDR, that does not specify an application ID, the PDR that does not specify an application ID having a lower priority than a PDR that specifies an application ID.

3. The method according to claim 2, wherein
the PDR that does not specify an application ID is associated with a Usage Reporting Rule, URR, provided with a start trigger, the start trigger being used to trigger new service identification reporting;
or wherein
the PDR that does not specify an application ID is associated with a Forwarding Action Rule, FAR, provided with a caching operation.

4. The method according to any one of claims 1 to 3, wherein determining, by a control plane function, that a terminal initiates a new service to a user plane function comprises:
receiving, by the control plane function, a new service identification reporting notification sent by the user plane function, and determining that the terminal initiates a new service to the user plane function according to the new service identification reporting notification;
or, wherein sending, by the control plane function, a rule of the new service to the user plane function comprises:
sending, by the control plane function, a rule of the new service to the user plane function through a session modification request.

5. The method according to claim 4, further comprising:
instructing, by the control plane function, to update the URR provided with a start trigger through the session modification request so as to reset the start trigger.

6. A rule receiving method, comprising:
receiving, by the user plane function, a service packet of a new service initiated by a terminal, and detecting the service packet through the new service detector to determine that the terminal initiates a new service, wherein the new service detector comprises a packet matching rule with a preset matching parameter, and detecting the service packet through the new service detector to determine that the terminal initiates a new service comprises: matching the service packet through the packet matching rule, and determining that the terminal initiates a new service when the matching is successful; wherein the new service is a service that no rule is installed in the user plane function (401); and
acquiring, by the user plane function, a rule of the new service from a control plane function, and installing the rule (402);
wherein before determining, by a user plane function, that a terminal initiates a new service, the method further comprises:
creating, by the user plane function, one or more new service detectors, the new service detector being used to detect a service that no rule is installed in the user plane function (701);
wherein the new service detector is used to detect at least one of the following services: a default bearer service, a dedicated bearer service, or a dynamic rule service;
before determining, by a user plane function, that a terminal initiates a new service, the method further comprises: receiving, by the user plane function, a rule of a common service sent by the control plane function, and installing the rule (601), wherein the common service is determined, by the control plane function, by adopting at least one of the following manners: according to received configuration information; according to a statistical ranking of service-related global statistical data; and according to a user Internet surfing behavior record.

7. The method according to claim 6,
wherein the packet matching rule comprises a Packet Detection Rule, PDR, that does not specify an application ID, the PDR that does not specify an application ID having a lower priority than a PDR that specifies an application ID;
preferably, wherein
the PDR that does not specify an application ID is associated with a Usage Reporting Rule (URR) provided with a start trigger, the start trigger being used to trigger new service identification reporting;
preferably, wherein the PDR that does not specify an application ID is associated with a Forwarding Action Rule, FAR, provided with a caching operation, and after determining, by a user plane function, that a terminal initiates a new service, the method further comprises:
caching, by the user plane function, a service packet of the new service;
preferably, wherein after acquiring, by the user plane function, a rule of the new service from a control plane function, and installing the rule, the method further comprises:
releasing, by the user plane function, the cached service packet of the new service, re-matching a rule, and executing according to the rule of the new service;
preferably, wherein the step of acquiring, by the user plane function, a rule of the new service from a control plane function and installing the rule comprises:
sending, by the user plane function, a new service identification reporting notification to the control plane function (501); and
receiving, by the user plane function, a session modification request sent by the control plane function, the session modification request carrying the rule of the new service (502);
preferably, further comprising:
instructing, by the user plane function, to update the URR provided with a start trigger according to the session modification request so as to reset the start trigger.

8. A control plane function, comprising:
a first determination module (1601), configured to determine that a terminal initiates a new service to a user plane function, wherein the new service is a service that no rule is installed in the user plane function; and
a sending module (1602), configured to send a rule of the new service to the user plane function;
the control plane function, configured to instruct the user plane function to create one or more new service detectors, the new service detector being used to detect a service that no rule is installed in the user plane function, wherein the new service detector comprises a packet matching rule with a preset matching parameter, the new service detector being used to match the service packet through the packet matching rule, and determine that the terminal initiates a new service when the matching is successful; wherein the new service detector is used to detect at least one of the following services: a default bearer service, a dedicated bearer service, or a dynamic rule service;
the control plane function, further configured to determine the common service by adopting at least one of the following manners: determining the common service according to received configuration information; determining the common service according to a statistical ranking of service-related global statistical data; and determining the common service according to a user Internet surfing behavior record; send a rule of a common service to the user plane function in advance.

9. A user plane function, comprising:
a second determination module (1701), receive a service packet of a new service initiated by a terminal, and detect the service packet through the new service detector to determine that the terminal initiates a new service, wherein the new service detector comprises a packet matching rule with a preset matching parameter, and detect the service packet through the new service detector to determine that the terminal initiates a new service comprises: match the service packet through the packet matching rule, and determine that the terminal initiates a new service when the matching is successful; wherein the new service is a service that no rule is installed in the user plane function; and
an acquisition module (1702), configured to acquire a rule of the new service from a control plane function, and install the rule;
the user plane function, configured to create one or more new service detectors, the new service detector being used to detect a service that no rule is installed in the user plane function; wherein the new service detector is used to detect at least one of the following services: a default bearer service, a dedicated bearer service, or a dynamic rule service;
the user plane function, further configured to before determine that a terminal initiates a new service, receive a rule of a common service sent by the control plane function, and installing the rule, wherein the common service is determined, by the control plane function, by adopting at least one of the following manners: according to received configuration information; according to a statistical ranking of service-related global statistical data; and according to a user Internet surfing behavior record.

## Patentansprüche

1. Regelsendeverfahren, umfassend:
Bestimmen durch eine Steuerungsebenenfunktion, dass ein Endgerät einen neuen Dienst an eine Nutzerebenenfunktion initiiert, wobei der neue Dienst ein Dienst ist, für den in der Nutzerebenenfunktion keine Regel installiert ist (101); und
Senden einer Regel für den neuen Dienst durch die Steuerungsebenenfunktion an die Nutzerebenenfunktion (102);
wobei das Verfahren vor dem Bestimmen durch eine Steuerungsebenenfunktion, dass ein Endgerät einen neuen Dienst an eine Nutzerebenenfunktion initiiert, ferner umfasst:
Anweisen der Nutzerebenenfunktion durch die Steuerungsebenenfunktion, einen oder mehrere Detektoren für neue Dienste zu erstellen, wobei der Detektor für neue Dienste dazu verwendet wird, einen Dienst zu erkennen, für den in der Nutzerebenenfunktion keine Regel installiert ist (301), wobei der Detektor für neue Dienste eine Paketabgleichungsregel mit einem voreingestellten Abgleichungsparameter umfasst, der Detektor für neue Dienste dazu verwendet wird, das Dienstpaket anhand der Paketabgleichungsregel abzugleichen und zu bestimmen, dass das Endgerät einen neuen Dienst initiiert, wenn der Abgleich erfolgreich ist;
wobei der Detektor für neue Dienste dazu verwendet wird, mindestens einen der folgenden Dienste zu erkennen: einen Standard-Trägerdienst, einen dedizierten Trägerdienst oder einen dynamischen Regeldienst;
wobei das Verfahren vor dem Bestimmen durch eine Steuerungsebenenfunktion, dass ein Endgerät einen neuen Dienst an eine Nutzerebenenfunktion initiiert, ferner umfasst:
Bestimmen des gemeinsamen Dienstes durch die Steuerungsebenenfunktion durch Anwenden mindestens einer der folgenden Methoden: Bestimmen des gemeinsamen Dienstes gemäß empfangenen Konfigurationsinformationen; Bestimmen des gemeinsamen Dienstes gemäß einer statistischen Rangfolge von dienstbezogenen globalen statistischen Daten; und Bestimmen des gemeinsamen Dienstes gemäß einer Aufzeichnung des Internet-Surfverhaltens eines Benutzers;
Senden einer Regel für einen gemeinsamen Dienst durch die Steuerungsebenenfunktion an die Nutzerebenenfunktion im Voraus (201).

2. Verfahren nach Anspruch 1, wobei die Paketabgleichungsregel eine Paketerkennungsregel (PDR, Packet Detection Rule) umfasst, die keine Anwendungs-ID angibt, wobei die PDR, die keine Anwendungs-ID angibt, eine niedrigere Priorität aufweist als eine PDR, die eine Anwendungs-ID angibt.

3. Verfahren nach Anspruch 2, wobei
die PDR, die keine Anwendungs-ID angibt, einer Nutzungsberichtsregel (URR, Usage Reporting Rule) zugeordnet ist, die mit einem Startauslöser versehen ist, wobei der Startauslöser dazu verwendet wird, einen neuen Dienstidentifikationsbericht auszulösen;
oder wobei
die PDR, die keine Anwendungs-ID angibt, einer Weiterleitungsaktionsregel (FAR, Forwarding Action Rule) zugeordnet ist, die mit einem Caching-Vorgang versehen ist.

4. Verfahren nach einem der Ansprüche 1 bis 3, wobei das Bestimmen durch eine Steuerungsebenenfunktion, dass ein Endgerät einen neuen Dienst an eine Nutzerebenenfunktion initiiert, umfasst:
Empfangen einer von der Nutzerebenenfunktion gesendeten neuen Dienstidentifikationsberichtsbenachrichtigung durch die Steuerungsebenenfunktion und Bestimmen, dass das Endgerät gemäß der neuen Dienstidentifikationsberichtsbenachrichtigung einen neuen Dienst an die Nutzerebenenfunktion initiiert;
oder wobei das Senden einer Regel für den neuen Dienst durch die Steuerungsebenenfunktion an die Nutzerebenenfunktion umfasst:
Senden einer Regel für den neuen Dienst durch die Steuerungsebenenfunktion an die Nutzerebenenfunktion mittels einer Sitzungsänderungsanforderung.

5. Verfahren nach Anspruch 4, ferner umfassend:
Anweisen durch die Steuerungsebenenfunktion, die mit einem Startauslöser versehene URR mittels der Sitzungsänderungsanforderung so zu aktualisieren, dass der Startauslöser zurückgesetzt wird.

6. Regelempfangsverfahren, umfassend:
Empfangen eines Dienstpakets eines neuen, von einem Endgerät initiierten Dienstes durch die Nutzerebenenfunktion und Erkennen des Dienstpakets durch den Detektor für neue Dienste, um zu bestimmen, dass das Endgerät einen neuen Dienst initiiert, wobei der Detektor für neue Dienste eine Paketabgleichungsregel mit einem voreingestellten Abgleichungsparameter umfasst, und das Erkennen des Dienstpakets durch den Detektor für neue Dienste, um zu bestimmen, dass das Endgerät einen neuen Dienst initiiert, umfasst: Abgleichen des Dienstpakets mittels der Paketabgleichungsregel und Bestimmen, dass das Endgerät einen neuen Dienst initiiert, wenn der Abgleich erfolgreich ist; wobei der neue Dienst ein Dienst ist, für den in der Nutzerebenenfunktion keine Regel installiert ist (401); und
Abrufen einer Regel für den neuen Dienst von einer Steuerungsebenenfunktion durch die Nutzerebenenfunktion und Installieren der Regel (402);
wobei das Verfahren vor dem Bestimmen durch eine Nutzerebenenfunktion, dass ein Endgerät einen neuen Dienst initiiert, ferner umfasst:
Erstellen eines oder mehrerer Detektoren für neue Dienste durch die Nutzerebenenfunktion, wobei der Detektor für neue Dienste dazu verwendet wird, einen Dienst zu erkennen, für den in der Nutzerebenenfunktion keine Regel installiert ist (701);
wobei der Detektor für neue Dienste dazu verwendet wird, mindestens einen der folgenden Dienste zu erkennen: einen Standard-Trägerdienst, einen dedizierten Trägerdienst oder einen dynamischen Regeldienst;
wobei das Verfahren vor dem Bestimmen durch eine Nutzerebenenfunktion, dass ein Endgerät einen neuen Dienst initiiert, ferner umfasst: Empfangen einer Regel für einen gemeinsamen Dienst, die von der Steuerungsebenenfunktion gesendet wird, durch die Nutzerebenenfunktion und Installieren der Regel (601), wobei der gemeinsame Dienst durch die Steuerungsebenenfunktion durch Anwenden mindestens einer der folgenden Methoden bestimmt wird: gemäß empfangenen Konfigurationsinformationen; gemäß einer statistischen Rangfolge von dienstbezogenen globalen statistischen Daten; und gemäß einer Aufzeichnung des Internet-Surfverhaltens eines Benutzers.

7. Verfahren nach Anspruch 6,
wobei die Paketabgleichungsregel eine Paketerkennungsregel (PDR) umfasst, die keine Anwendungs-ID angibt, wobei die PDR, die keine Anwendungs-ID angibt, eine niedrigere Priorität aufweist als eine PDR, die eine Anwendungs-ID angibt;
vorzugsweise wobei
die PDR, die keine Anwendungs-ID angibt, einer Nutzungsberichtsregel (Usage Reporting Rule, URR) zugeordnet ist, die mit einem Startauslöser versehen ist, wobei der Startauslöser dazu verwendet wird, einen neuen Dienstidentifikationsbericht auszulösen;
vorzugsweise wobei die PDR, die keine Anwendungs-ID angibt, einer Weiterleitungsaktionsregel (Forwarding Action Rule, FAR) zugeordnet ist, die mit einem Caching-Vorgang versehen ist, und das Verfahren nach dem Bestimmen durch eine Nutzerebenenfunktion, dass ein Endgerät einen neuen Dienst initiiert, ferner umfasst:
Zwischenspeichern eines Dienstpakets des neuen Dienstes durch die Nutzerebenenfunktion;
vorzugsweise wobei das Verfahren nach dem Abrufen einer Regel für den neuen Dienst von einer Steuerungsebenenfunktion durch die Nutzerebenenfunktion und dem Installieren der Regel ferner umfasst:
Freigeben des zwischengespeicherten Dienstpakets des neuen Dienstes durch die Nutzerebenenfunktion, erneutes Abgleichen einer Regel und Ausführen gemäß der Regel des neuen Dienstes; vorzugsweise wobei der Schritt des Abrufens einer Regel für den neuen Dienst von einer Steuerungsebenenfunktion durch die Nutzerebenenfunktion und des Installierens der Regel umfasst: Senden einer neuen Dienstidentifikationsberichtsbenachrichtigung durch die Nutzerebenenfunktion an die Steuerungsebenenfunktion (501); und
Empfangen einer von der Steuerungsebenenfunktion gesendeten Sitzungsänderungsanforderung durch die Nutzerebenenfunktion, wobei die Sitzungsänderungsanforderung die Regel des neuen Dienstes enthält (502);
vorzugsweise ferner umfassend:
Anweisen durch die Nutzerebenenfunktion, die mit einem Startauslöser versehene URR gemäß der Sitzungsänderungsanforderung so zu aktualisieren, dass der Startauslöser zurückgesetzt wird.

8. Steuerungsebenenfunktion, umfassend:
ein erstes Bestimmungsmodul (1601), das zum Bestimmen konfiguriert ist, dass ein Endgerät einen neuen Dienst an eine Nutzerebenenfunktion initiiert, wobei der neue Dienst ein Dienst ist, für den in der Nutzerebenenfunktion keine Regel installiert ist; und
ein Sendemodul (1602), das zum Senden einer Regel für den neuen Dienst an die Nutzerebenenfunktion konfiguriert ist;
wobei die Steuerungsebenenfunktion dazu konfiguriert ist, die Nutzerebenenfunktion anzuweisen, einen oder mehrere Detektoren für neue Dienste zu erstellen, wobei der Detektor für neue Dienste dazu verwendet wird, einen Dienst zu erkennen, für den in der Nutzerebenenfunktion keine Regel installiert ist, wobei der Detektor für neue Dienste eine Paketabgleichungsregel mit einem voreingestellten Abgleichungsparameter umfasst, der Detektor für neue Dienste dazu verwendet wird, das Dienstpaket anhand der Paketabgleichungsregel abzugleichen und zu bestimmen, dass das Endgerät einen neuen Dienst initiiert, wenn der Abgleich erfolgreich ist; wobei der Detektor für neue Dienste dazu verwendet wird, mindestens einen der folgenden Dienste zu erkennen: einen Standard-Trägerdienst, einen dedizierten Trägerdienst oder einen dynamischen Regeldienst;
wobei die Steuerungsebenenfunktion ferner dazu konfiguriert ist, den gemeinsamen Dienst durch Anwenden mindestens einer der folgenden Methoden zu bestimmen: Bestimmen des gemeinsamen Dienstes gemäß empfangenen Konfigurationsinformationen; Bestimmen des gemeinsamen Dienstes gemäß einer statistischen Rangfolge von dienstbezogenen globalen statistischen Daten; und Bestimmen des gemeinsamen Dienstes gemäß einer Aufzeichnung des Internet-Surfverhaltens eines Benutzers; Senden einer Regel für einen gemeinsamen Dienst an die Nutzerebenenfunktion im Voraus.

9. Nutzerebenenfunktion, umfassend:
ein zweites Bestimmungsmodul (1701), Empfangen eines Dienstpakets eines neuen, von einem Endgerät initiierten Dienstes und Erkennen des Dienstpakets durch den Detektor für neue Dienste, um zu bestimmen, dass das Endgerät einen neuen Dienst initiiert, wobei der Detektor für neue Dienste eine Paketabgleichungsregel mit einem voreingestellten Abgleichungsparameter umfasst, und das Erkennen des Dienstpakets durch den Detektor für neue Dienste, um zu bestimmen, dass das Endgerät einen neuen Dienst initiiert, umfasst: Abgleichen des Dienstpakets mittels der Paketabgleichungsregel und Bestimmen, dass das Endgerät einen neuen Dienst initiiert, wenn der Abgleich erfolgreich ist; wobei der neue Dienst ein Dienst ist, für den in der Nutzerebenenfunktion keine Regel installiert ist; und
ein Abrufmodul (1702), das zum Abrufen einer Regel für den neuen Dienst von einer Steuerungsebenenfunktion und Installieren der Regel konfiguriert ist;
wobei die Nutzerebenenfunktion dazu konfiguriert ist, einen oder mehrere Detektoren für neue Dienste zu erstellen, wobei der Detektor für neue Dienste dazu verwendet wird, einen Dienst zu erkennen, für den in der Nutzerebenenfunktion keine Regel installiert ist, wobei der Detektor für neue Dienste dazu verwendet wird, mindestens einen der folgenden Dienste zu erkennen: einen Standard-Trägerdienst, einen dedizierten Trägerdienst oder einen dynamischen Regeldienst;
wobei die Nutzerebenenfunktion vor dem Bestimmen, dass ein Endgerät einen neuen Dienst initiiert, ferner zum Empfangen einer Regel für einen gemeinsamen Dienst, die von der Steuerungsebenenfunktion gesendet wird, und Installieren der Regel konfiguriert ist, wobei der gemeinsame Dienst durch die Steuerungsebenenfunktion durch Anwenden mindestens einer der folgenden Methoden bestimmt wird: gemäß empfangenen Konfigurationsinformationen; gemäß einer statistischen Rangfolge von dienstbezogenen globalen statistischen Daten; und gemäß einer Aufzeichnung des Internet-Surfverhaltens eines Benutzers.

## Revendications

1. Procédé d'envoi de règles, comprenant :
déterminer, par une fonction de plan de commande, qu'un terminal lance un nouveau service vers une fonction de plan utilisateur, dans lequel le nouveau service est un service pour lequel aucune règle n'est installée dans la fonction de plan utilisateur (101) ; et
envoyer, par la fonction de plan de commande, une règle du nouveau service à la fonction de plan utilisateur (102) ;
dans lequel avant de déterminer, par une fonction de plan de commande, qu'un terminal lance un nouveau service vers une fonction de plan utilisateur, le procédé comprend en outre :
ordonner, par la fonction de plan de commande, à la fonction de plan utilisateur de créer un ou plusieurs détecteurs de nouveau service, le détecteur de nouveau service étant utilisé pour détecter un service pour lequel aucune règle n'est installée dans la fonction de plan utilisateur (301), dans lequel le détecteur de nouveau service comprend une règle de correspondance de paquets avec un paramètre de correspondance prédéfini, le détecteur de nouveau service étant utilisé pour faire correspondre le paquet de service à travers la règle de correspondance de paquets, et déterminer que le terminal lance un nouveau service lorsque la correspondance est réussie ;
dans lequel le détecteur de nouveau service est utilisé pour détecter au moins un des services suivants : un service porteur par défaut, un service porteur dédié ou un service de règle dynamique ;
dans lequel avant de déterminer, par une fonction de plan de commande, qu'un terminal lance un nouveau service vers une fonction de plan utilisateur, le procédé comprend en outre :
déterminer, par la fonction de plan de commande, le service commun en adoptant au moins une des manières suivantes : déterminer le service commun en fonction des informations de configuration reçues ; déterminer le service commun en fonction d'un classement statistique de données statistiques globales liées au service ; et déterminer le service commun en fonction d'un enregistrement de comportement de navigation Internet de l'utilisateur ;
envoyer, par la fonction de plan de commande, une règle d'un service commun à la fonction de plan utilisateur à l'avance (201).

2. Procédé selon la revendication 1, dans lequel la règle de correspondance de paquets comprend une règle de détection de paquets (Packet Detection Rule, PDR) qui ne spécifie pas d'ID d'application, la PDR qui ne spécifie pas d'ID d'application ayant une priorité inférieure à une PDR qui spécifie un ID d'application.

3. Procédé selon la revendication 2, dans lequel
la PDR qui ne spécifie pas d'ID d'application est associée à une règle de rapport d'utilisation (Usage Reporting Rule, URR) dotée d'un déclencheur de démarrage, le déclencheur de démarrage étant utilisé pour déclencher un nouveau rapport d'identification de nouveau service ;
ou dans lequel
la PDR qui ne spécifie pas d'ID d'application est associée à une règle d'action de transfert (Forwarding Action Rule, FAR) dotée d'une opération de mise en cache.

4. Procédé selon l'une quelconque des revendications 1 à 3, dans lequel la détermination, par une fonction de plan de commande, qu'un terminal lance un nouveau service vers une fonction de plan utilisateur comprend :
recevoir, par la fonction de plan de commande, une notification de rapport d'identification de nouveau service envoyée par la fonction de plan utilisateur, et déterminer que le terminal lance un nouveau service à la fonction de plan utilisateur en fonction de la notification de rapport d'identification de nouveau service ;
ou, dans lequel l'envoi, par la fonction de plan de commande, d'une règle du nouveau service à la fonction de plan utilisateur comprend :
envoyer, par la fonction de plan de commande, une règle du nouveau service à la fonction de plan utilisateur par le biais d'une demande de modification de session.

5. Procédé selon la revendication 4, comprenant en outre :
ordonner, par la fonction de plan de commande, de mettre à jour la URR dotée d'un déclencheur de démarrage par le biais de la demande de modification de session afin de réinitialiser le déclencheur de démarrage.

6. Procédé de réception de règles, comprenant :
recevoir, par la fonction de plan utilisateur, un paquet de service d'un nouveau service lancé par un terminal, et détecter le paquet de service par l'intermédiaire du détecteur de nouveau service pour déterminer que le terminal lance un nouveau service, dans lequel le détecteur de nouveau service comprend une règle de correspondance de paquets avec un paramètre de correspondance prédéfini, et détecter le paquet de service par l'intermédiaire du détecteur de nouveau service pour déterminer que le terminal lance un nouveau service comprend : la correspondance du paquet de service par l'intermédiaire de la règle de correspondance de paquets, et la détermination que le terminal lance un nouveau service lorsque la correspondance est réussie; dans lequel le nouveau service est un service pour lequel aucune règle n'est installée dans la fonction de plan utilisateur (401) ; et
acquérir, par la fonction de plan utilisateur, une règle du nouveau service à partir d'une fonction de plan de commande, et installer la règle (402) ;
dans lequel avant de déterminer, par une fonction de plan utilisateur, qu'un terminal lance un nouveau service, le procédé comprend en outre :
créer, par la fonction de plan utilisateur, un ou plusieurs détecteurs de nouveau service, le détecteur de nouveau service étant utilisé pour détecter un service pour lequel aucune règle n'est installée dans la fonction de plan utilisateur (701) ;
dans lequel le détecteur de nouveau service est utilisé pour détecter au moins un des services suivants : un service porteur par défaut, un service porteur dédié ou un service de règle dynamique ;
avant de déterminer, par une fonction de plan utilisateur, qu'un terminal lance un nouveau service, le procédé comprend en outre : la réception, par la fonction de plan utilisateur, d'une règle d'un service commun envoyée par la fonction de plan de commande, et l'installation de la règle (601), dans lequel le service commun est déterminé, par la fonction de plan de commande, en adoptant au moins une des manières suivantes : en fonction des informations de configuration reçues ; en fonction d'un classement statistique des données statistiques globales liées au service ; et en fonction d'un enregistrement de comportement de navigation Internet de l'utilisateur.

7. Procédé selon la revendication 6,
dans lequel la règle de correspondance de paquets comprend une règle de détection de paquets (Packet Detection Rule, PDR), qui ne spécifie pas d'ID d'application, la PDR qui ne spécifie pas d'ID d'application ayant une priorité inférieure à une PDR qui spécifie un ID d'application ;
de préférence, dans lequel
la PDR qui ne spécifie pas d'ID d'application est associée à une règle de rapport d'utilisation (Usage Reporting Rule, URR) dotée d'un déclencheur de démarrage, le déclencheur de démarrage étant utilisé pour déclencher un nouveau rapport d'identification de service ;
de préférence, dans lequel la PDR qui ne spécifie pas d'ID d'application est associée à une règle d'action de transfert Forwarding Action Rule, FAR), dotée d'une opération de mise en cache, et après avoir déterminé, par une fonction de plan utilisateur, qu'un terminal lance un nouveau service, le procédé comprend en outre :
mettre en cache, par la fonction de plan utilisateur, un paquet de service du nouveau service ;
de préférence, dans lequel après l'acquisition, par la fonction de plan utilisateur, d'une règle du nouveau service à partir d'une fonction de plan de commande, et l'installation de la règle, le procédé comprend en outre :
libérer, par la fonction de plan utilisateur, du paquet de service mis en cache du nouveau service, la re-correspondance d'une règle et l'exécution en fonction de la règle du nouveau service ;
de préférence, dans lequel l'étape d'acquisition, par la fonction de plan utilisateur, d'une règle du nouveau service à partir d'une fonction de plan de commande, et l'installation de la règle comprend:
envoyer, par la fonction de plan utilisateur, une notification de rapport d'identification de nouveau service à la fonction de plan de commande (501) ; et
recevoir, par la fonction de plan utilisateur, une demande de modification de session envoyée par la fonction de plan de commande, la demande de modification de session portant la règle du nouveau service (502) ;
de préférence, comprenant en outre :
ordonner, par la fonction de plan de commande, de mettre à jour la URR dotée d'un déclencheur de démarrage en fonction de la demande de modification de session afin de réinitialiser le déclencheur de démarrage.

8. Fonction de plan de commande, comprenant :
un premier module de détermination (1601), configuré pour déterminer qu'un terminal lance un nouveau service vers une fonction de plan utilisateur, dans lequel le nouveau service est un service pour lequel aucune règle n'est installée dans la fonction de plan utilisateur ; et
un module d'envoi (1602), configuré pour envoyer une règle du nouveau service à la fonction de plan utilisateur ;
la fonction de plan de commande, configurée pour ordonner à la fonction de plan utilisateur de créer un ou plusieurs détecteurs de nouveau service, le détecteur de nouveau service étant utilisé pour détecter un service pour lequel aucune règle n'est installée dans la fonction de plan utilisateur, dans lequel le détecteur de nouveau service comprend une règle de correspondance de paquets avec un paramètre de correspondance prédéfini, le détecteur de nouveau service étant utilisé pour faire correspondre le paquet de service par le biais de la règle de correspondance de paquets, et déterminer que le terminal lance un nouveau service lorsque la correspondance est réussie ; dans lequel le détecteur de nouveau service est utilisé pour détecter au moins l'un des services suivants : un service porteur par défaut, un service porteur dédié ou un service de règle dynamique ;
la fonction de plan de commande, configurée en outre pour déterminer le service commun en adoptant au moins une des manières suivantes : déterminer le service commun en fonction des informations de configuration reçues ; déterminer le service commun en fonction d'un classement statistique des données statistiques globales liées au service ; et déterminer le service commun en fonction d'un enregistrement de comportement de navigation sur Internet de l'utilisateur ; envoyer une règle d'un service commun à la fonction de plan d'utilisateur à l'avance.

9. Fonction de plan utilisateur, comprenant :
un deuxième module de détermination (1701), recevoir un paquet de service d'un nouveau service lancé par un terminal, et détecter le paquet de service à travers le détecteur de nouveau service pour déterminer que le terminal lance un nouveau service, dans lequel le détecteur de nouveau service comprend une règle de correspondance de paquet avec un paramètre de correspondance prédéfini, et détecter le paquet de service à travers le détecteur de nouveau service pour déterminer que le terminal lance un nouveau service comprend : faire correspondre le paquet de service à travers la règle de correspondance de paquet, et déterminer que le terminal lance un nouveau service lorsque la correspondance est réussie ; dans lequel le nouveau service est un service pour lequel aucune règle n'est installée dans la fonction de plan utilisateur ; et
un module d'acquisition (1702), configuré pour acquérir une règle du nouveau service à partir d'une fonction de plan de commande, et installer la règle ;
la fonction de plan utilisateur, configurée pour créer un ou plusieurs détecteurs de nouveau service, le détecteur de nouveau service étant utilisé pour détecter un service pour lequel aucune règle n'est installée dans la fonction de plan utilisateur ; dans lequel le détecteur de nouveau service est utilisé pour détecter au moins l'un des services suivants : un service porteur par défaut, un service porteur dédié ou un service de règle dynamique ;
la fonction de plan utilisateur, configurée en outre pour déterminer auparavant qu'un terminal lance un nouveau service, recevoir une règle d'un service commun envoyé par la fonction de plan de commande, et installer la règle, dans laquelle le service commun est déterminé, par la fonction de plan de commande, en adoptant au moins une des manières suivantes : en fonction d'informations de configuration reçues ; en fonction d'un classement statistique de données statistiques globales liées au service ; et en fonction d'un enregistrement de comportement de navigation Internet de l'utilisateur.
